# EUROPEAN PATENT APPLICATION

(11) **EP 0 967 770 A1**
(43) Date of publication of application: **29.12.1999**
(21) Application number: 99301984.3
(22) Date of filing: 15.03.1999
(51) Int. Cl.: H04L 29/12

(54) **Auto-initialization of special purpose network devices**

(30) Priority: 23.03.1998 US 46429
(71) Applicant: NORTEL NETWORKS CORPORATION, Montreal, Quebec H2Y 3Y4 (CA)
(72) Inventor: Christie, Samuel Henry IV, Cary, North Carolina 27513 (US)
(74) Representative: Williamson, Brian

(57) **Abstract**

A method of automatically initializing special purpose network devices with network environment information such as the network address, and a special purpose network device using the method. The special purpose network device detects an initialization event, and automatically captures the network environment information of an associated network device. The special purpose network device can then use this information, especially the address. The special purpose network device contains program code or specialized hardware to implement the method of the invention. The invention can be used with any network device in any type of network, however, the invention lends itself to use with Internet protocol (IP) telephones.

## Description

This invention relates to how special purpose network devices are initialized. More specifically, this invention relates to how a special purpose network device determines how it is addressed within the network so that it can be found by other devices in the network. This invention is particularly useful with special purpose Internet protocol devices such as Internet telephones, however, the invention is applicable to any kind of network device in any kind of network.

Our society is in the midst in a networking revolution. In times past, computer networks, voice networks, and other special purpose networks all operated independently. Increasingly, these networks are beginning to work together and the lines between them are becoming blurred. For example, large, modern data networks and large, modern voice networks share many of the same resources. Indeed, many devices which used to be found only in voice networks are now found in data networks as well. In particular, Internet protocol (IP) networks which used to connect many computers together, are now connecting together computers, telephones, and other special purpose network devices. I call a computer a general-purpose network device because a computer can be programmed to perform multiple functions. I call a device such as a telephone or a network-controlled thermostat a special purpose network device because such a device is dedicated to a very specific purpose.

The proliferation of network devices, and especially special purpose network devices, has created many problems. Among the chief of these problems is the fact that too many network addresses are needed. When each device requires its own network address, all available network addresses become used up quickly. An additional problem with large numbers of devices is that each device must be programmed with information about its network environment, so it can respond appropriately to other devices in the network. This "environment information" includes at least the network address, but in many cases also includes the addresses of servers in the network and other information. Often this information changes, or must be reset because of a power surge or power outage.

For example, consider the IP telephone. Presently, in an IP network containing both computers and telephones, each telephone, and each computer must have a unique network address. Additionally each telephone, in addition to each computer, must be programmed with its environment information, and must be re-programmed with this information when the information changes, and sometimes when there is a power outage or power surge. In one scenario, the telephone is programmed with this information manually through keypad entry. This scenario results in a great deal of manual labor. In another scenario, an initialization program is run by a network device such as a telephone. The initialization program downloads the network address and other needed information from a master database. An example of such a system is the so-called bootstrap protocol, or "BOOTP" system. BOOTP provides a means for a computer or other network device to download its address, a gateway address, and other information. BOOTP has been the subject of numerous Internet Engineering Task Force Request for Comment (RFC) documents, including RFC-1048, RFC-1497, and others, all of which are well-known. A similar initialization system, dynamic host configuration protocol (DHCP) is also the subject of numerous RFC documents and also well known in the networking art. While systems like BOOTP and DHCP eliminate the need for manual labor in programming each individual network device, the master database must still be maintained. Also, such a system does nothing to reduce the number of network addresses being used. What is needed is a system in which each special purpose network device can use the same network address and other environment information as an associated network device and can learn the address and program itself automatically.

The present invention meets the above needs and solves the above problems by providing a system and method whereby a special purpose network device automatically learns the network environment information of an associated network device, and operates using that information. This information includes the network address, which the special purpose network device can use as its address instead of a separate address specifically assigned just to the special purpose network device. The special purpose network device learns the information and programs itself without human intervention, and does not use an additional network address. In operation, traffic destined for a specific type of special purpose network device must be distinguished through some parameter other than the network address from traffic destined from another network device with the same address. In the case of an IP network the port number can be used.

A special purpose network device according to the present invention initializes as follows. The device first detects an initialization event. After the initialization event is detected, the device waits for its associated network device, often a general purpose network device such as a personal computer, to send a packet or packets containing the environment information of the general-purpose network device. The special purpose network device examines the packet, determines the environment, and stores the environment information, including the network address. Exactly what type of network address is involved depends on the type of network involved. If the device is connected to an Internet protocol network, the address would be an IP address. When working purely in a local area network (LAN) environment, the address might be the media access control (MAC) address.

In most cases, the special purpose network device would include a network interface having a first network connection to a second network connection, an input/output block, and an encoder/decoder block. In one embodiment, the special purpose network device would also have a control block for controlling the functions of the device. The control block is connected to a memory device or some other type of storage device. The memory device includes program code which causes the special purpose network device to perform the method of the invention. The control block in combination with the program code would control all the operation of the device, and provide the means for executing the method specified by the invention. In another embodiment, the functions of the control block and memory are performed by special purpose circuit or circuitry. The special purpose network device could optionally include other components, such as a modem. The special purpose network device can take the form of an adapter card for a computer or workstation.

When the device is used with an IP network, the special purpose network device could make use of a digital subscriber loop (DSL). In this case, the special purpose network device would be connected via a LAN to a modem, which is in turn connected to a line module via a DSL. If the special purpose network device contained a modem, the special purpose network device would be connected directly to the line module. In any case the special purpose network device would then be connected to its associated network device, also via a LAN. The special purpose network device could also be connected to a router within an IP network or LAN. In either case, the special purpose network device could also be connected either directly, or through a LAN hub.

Embodiments of the present invention will now be described, by way of example, with reference to the accompanying drawings, in which:

FIG. 1 shows a flow chart illustrating a method in accordance with the present invention.

FIG. 2 shows an example of an address packet of the type which might be used with the invention.

FIG. 3 shows a functional block diagram of one embodiment of a special purpose network device in accordance with the present invention.

FIG. 4 shows a functional block diagram of another embodiment of a special purpose network device in accordance with the present invention.

FIG. 5 shows a network diagram in accordance with one network environment of the present invention.

FIG. 6 shows a network diagram according to another network environment of the present invention.

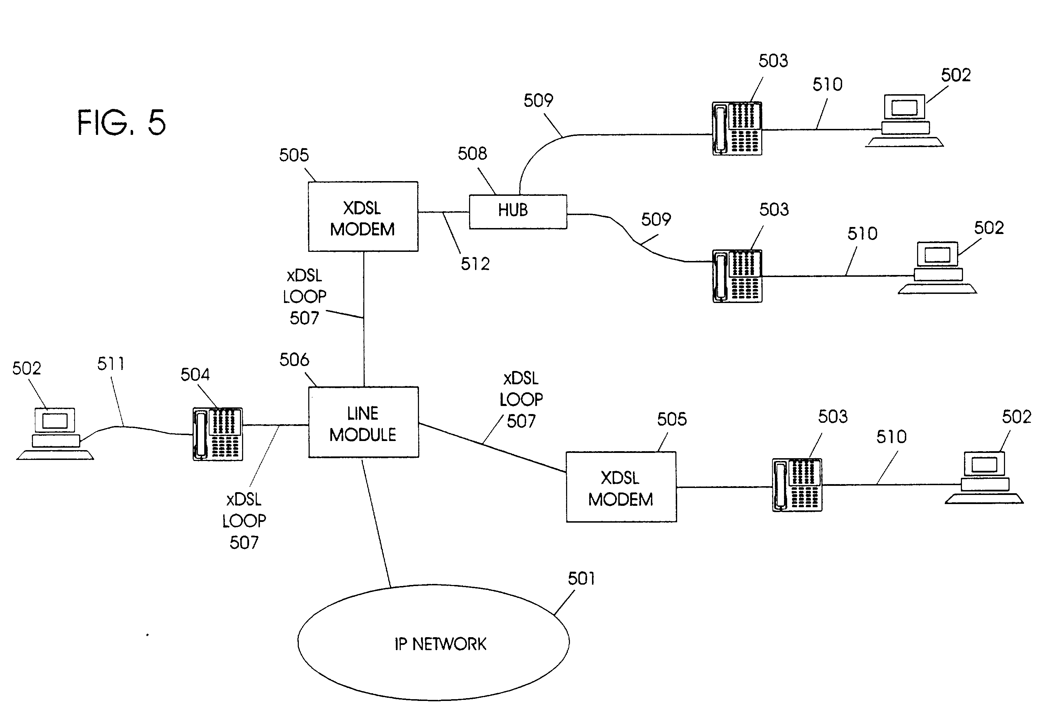

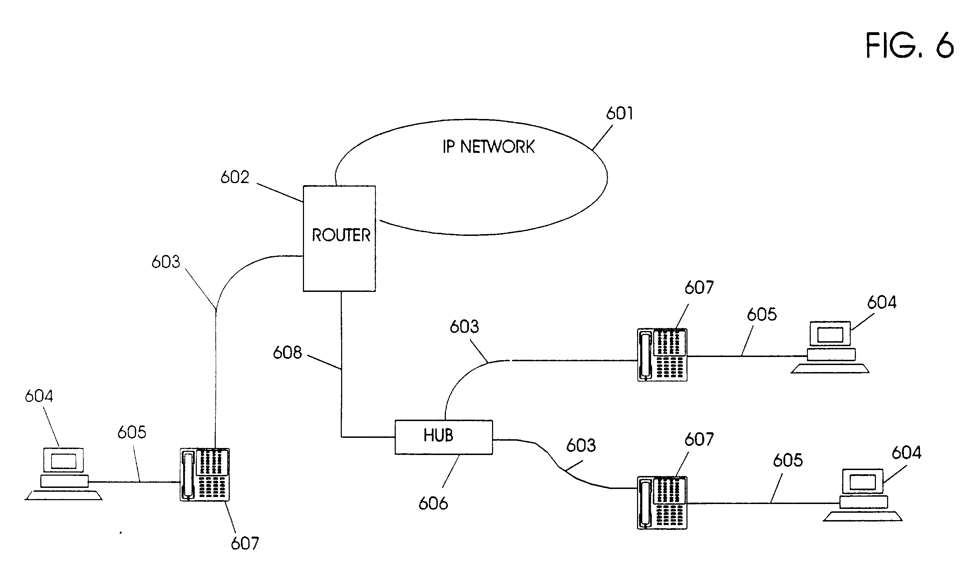

A special purpose network device which implements the present invention is typically inserted in a local area network (LAN) drop between the first LAN switching point and an end-user's associated network device, usually a general purpose network device such as a computer or workstation. For example, in Figure 5 Internet protocol (IP) telephones 503 are special purpose network devices. Connections 509 and 510 are LAN connections. Desktop computers 502 are end-user general purpose network devices. In Figure 6 IP telephones 607 are special purpose network devices and are inserted between LAN connections 603 and 605 in front of desktop computers 604, which are the general purpose network devices. More details on the network environment of the invention are provided later.

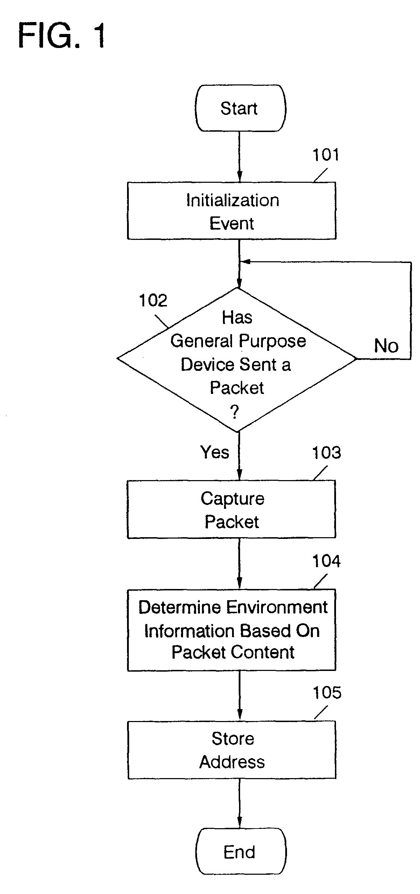

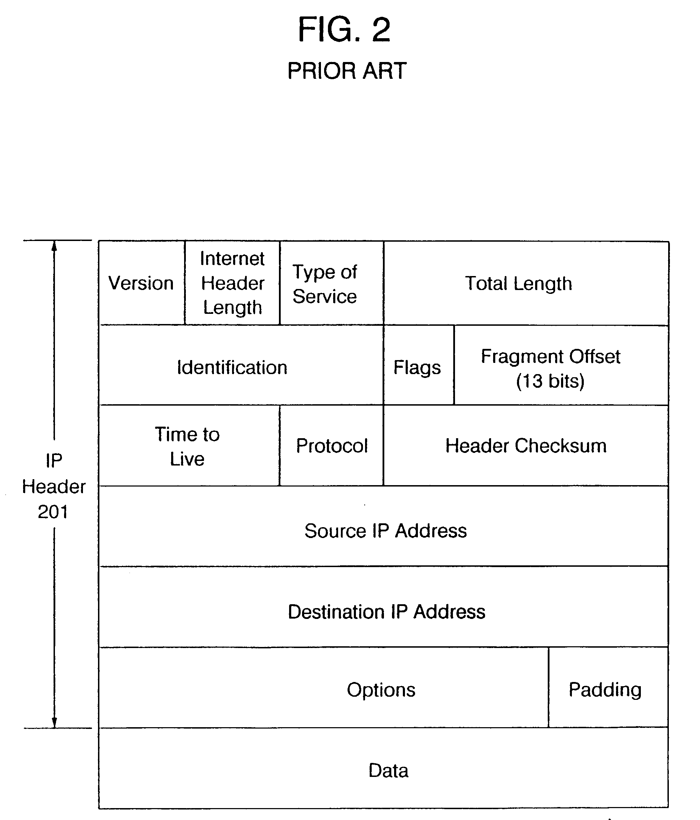

Figure 1 illustrates the operation of the special purpose network device, connected ultimately to an IP network by way of example. The special purpose network device of the present invention detects an initialization event at step 101. This initialization event can take many forms. In its simplest form, the initialization event is simply the powering on of the special purpose network device. The initialization event could also be the user pressing a button. The special purpose network device waits until it detects a packet being routed from the computer to the network at step 102. The special purpose network device captures the packet at 103. At 104, the special purpose network device determines the network environment information of the associated network device by analyzing the packet. This network environment information includes at least the network address, but can also include the addresses of gateways, servers, and other information. For simplicity I will center this discussion on the network address, and assume the associated network device is a personal computer or workstation. In the case of an IP network address, the special purpose network device determines the address by looking into the IP header of the packet. Such a packet showing the header 201 is illustrated in Figure 2. The packet is specified as part of the IP layer of the TCP/IP protocol suite. The special purpose network device can then determine the IP address of the associated network device, the computer, and store that IP address at step 105. The special purpose network device is programmed to respond to the same address as its "host" computer. In order to ensure that the special purpose network device responds only when appropriate, the special purpose network device is programmed to respond to packets which not only have the correct network address, but which also have some other identifying characteristic.

In the case of an IP network, the identifying characteristic is preferably the port number to which the packet is directed. Packets arriving from the network targeted at specific "well-known port numbers" assigned to the service implemented by the special purpose network device are delivered to the device and processed by the device while all others are simply forwarded onto the general purpose network device, in this case a personal computer or workstation. The port number to which a an IP packet is directed is specified in the TCP segment, which is part of the next layer of the TCP/IP protocol suite. The special purpose network device must take special care to pass packets intended for the computer on quickly so as not to interrupt normal processing on the personal computer, and at the same time, must not pass any packets to the computer which are intended for the device itself.

In the preferred embodiment, some mechanism should be provided to ensure that the associated network device exchanges packets with the network shortly after the initialization procedure begins. In the case of a special purpose network device connected to an IP network using a computer as an associated general purpose network device, instructions can be provided to the user directing him or her to browse a specific Web page after installing the device. This page would likely provide further user information or perhaps a welcome screen. The act of browsing this information would provide the new device sufficient packets to enable self configuration. If the network devices remain powered-up and in use for long periods of time, it may be necessary for the special purpose network device to "ping" its associated network device at some specified interval to make sure the associated device is still there and the environment information is the same.

With the IP network example, the address used will likely be an IP address and the other environment information would be specific to an IP network. However, the invention can just as easily be applied to special purpose network devices which are simply connected to an isolated LAN. In this case, for addressing purposes, the special purpose network device would usually capture the media access control (MAC) address. Instead of a port number being used to distinguish packets on the LAN, information contained in the next layer of the protocol stack for the LAN environment can be used. Which information is used would be an engineering decision which can be made by anyone of ordinary skill in the networking arts based on the specific type of LAN involved. Examples of LAN types which might be used include token ring and Ethernet in its various forms.

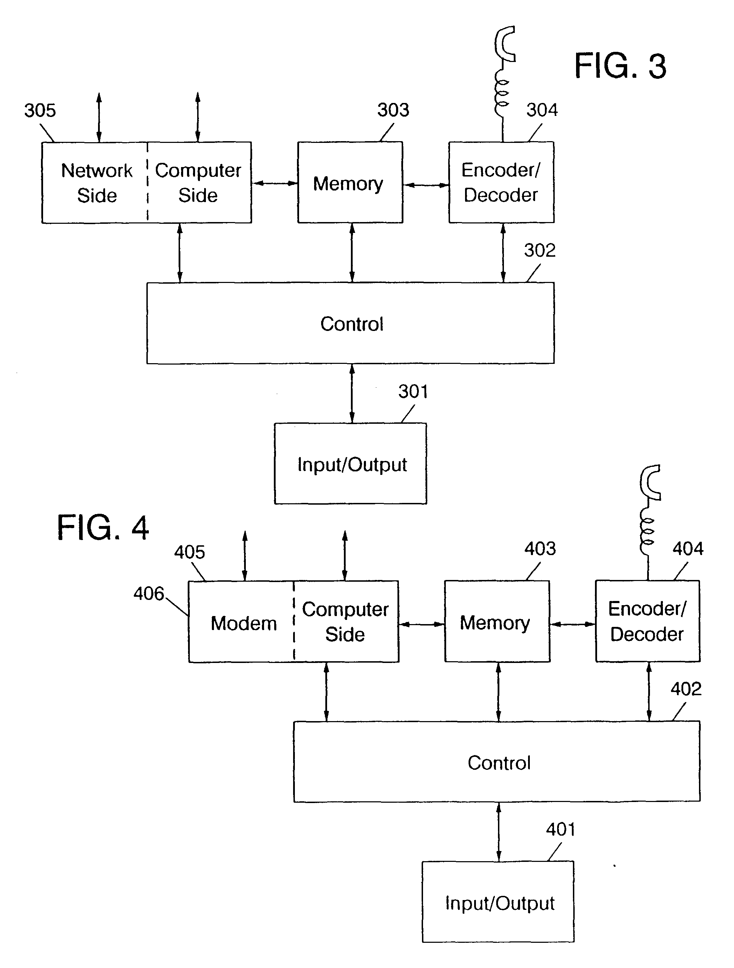

Figure 3 is a block diagram of a special purpose network device according to the present invention. The special purpose network device of Figure 3 is interfaced to the network by the network interface block 305. The network interface block has a first network connection for the "network side" of the block or the connection to the part of the network which connects to the wide area network. The network connection also has a second network connection for the "computer side" of the block or the part of the network which leads to an associated general purpose network device. The first network connection connects the special purpose network device to the network, usually via a LAN drop. The second network connection connects the special purpose network device to its associated general purpose network device, in this case a personal computer or workstation. The network interface block 305 contains readily available LAN drivers, receivers, and MAC circuitry. The details of these devices depend on the type of LAN being used. Encoder/decoder 304 connects the special purpose network device to a transducer or similar device which provides a way for real world information to get to and from the special purpose network device so that the device can perform the required functions. If the special purpose network device is an IP telephone, the encoder decoder is a CODEC of the type typically used in digital telephones, and it is connected to a telephone handset. A telephone handset is shown in Figure 3 for illustrative purposes. However, the transducer could also be a timer, temperature sensor, or any other special purpose transducer or input device which is consistent with the use of the special purpose network device overall. An input/output block 301 provides a way for a user or operator to control the operation of a device and to input data. In the case of an IP telephone the input output block 301 includes a keypad and usually an LCD display.

In the preferred embodiment, the operation of the special purpose network device is controlled by the control block 302 using program code which resides in the memory 303. It is this program code which implements the invention. The control block 302 includes a microprocessor or microcontroller, and supporting circuitry. The control block 302 is connected to all other elements of the special purpose network device. The memory 303 can be a magnetic storage device, but is more typically a semiconductor memory device or an array of semiconductor memory devices such as programmable read-only memory (PROM), erasable programmable read-only memory (EPROM), or flash memory, or a combination of memory devices. Memory 303 is also used to store the address of the special purpose network device which is captured according to the present invention, and so is connected to the network interface block. Memory 303 is also used to temporarily store data which is collected by the encoder/decoder, and so it is connected to the encoder/decoder as well as to the control block 302 It should be noted that in addition to the program code of the present invention, program code contained in memory and executed by control block 302 controls the other functions of the special purpose network device. These functions are dependent on the type of special purpose network device which is making use of the invention. IP telephones have already been discussed. However, almost any kind of device could be a special function network device. Other examples include a thermostat, a personal appliance, and a control console for a security system.

Figure 4 shows another embodiment of a special purpose network device. The device of Figure 4 is very similar to the device of Figure 3 includes control block 402, input/output block 401, encoder/decoder block 404, memory 403 and network interface block 405. The special purpose network device of Figure 4 includes an additional element: modem 406 which forms the network side of the network interface block 405. If a special purpose network device is needed which can interface directly to a subscriber loop, the modem is included so that an external modem is not needed. Except for the modem, the operation of device of Figure 4 is essentially the same as the operation of the device of Figure 3.

The foregoing descriptions of the special purpose network device are shown as examples only. There are numerous other possible embodiments of the device. For instance, although in the above example I described a control block and memory as forming the means for controlling the operation of the device, other types of circuitry can be used. Indeed, the functions can be entirely performed by a special purpose semiconductor chip or chipset. A person of ordinary skill in the art might design the functions into an "Internet protocol chip" for example. One or more gate arrays, programmable logic arrays, or other similar programmable semiconductor devices can be used. The functions might also be performed by discrete circuitry. Also, the entire special purpose network device can be formed as an adapter card for a computer or workstation, as opposed to a self-contained, stand-alone box. In this case, the computer side of the network interface would actually include a bus connector, as well as circuitry to translate network signals into computer bus signals. In fact, the "special purpose network device" does not have to be a device that only performs one function. It can be any device that acquires its network environment information from another device according to the invention. The term "special purpose network device" is used primarily as a naming convention.

Figure 5 is a network diagram which illustrates one possible network environment in which the present invention may be employed. In the network of Figure 5, the various network devices are interfaced to an Internet protocol (IP) network 501, via a digital subscriber loop (DSL). In Figure 5 the acronym "xDSL" is used instead of "DSL" to indicate that that there are various versions of DSL which may be used to implement this type of network. DSL is technically similar to T1 service but can use two-wire copper circuits with a variety of electrical and data compression methods. The most commonly known variant of DSL is ADSL or asymmetric digital subscriber loop. The original specification for ADSL sends up to 6 Mb and data downstream to the user and receives 640 Kb of data upstream from the user. Another variant of DSL is HDSL or high bit rate digital subscriber loop service. HDSL is used for the delivery of traditional T1 digital service over four wires. Still another variant of DSL is called SDSL or single pair HDSL, which in fact provides half of the T1 circuit of a direct copper pair between a user and a wide area network. These and other variants of DSL are well-known in the art.

In the network of Figure 5, an IP connection is split into various xDSL loops 507 by a line module 506. An xDSL loop can be connected to an xDSL modem 505 or directly to a special purpose network device 504 which has a modem built-in. An xDSL modem 504 converts loop data to LAN data. The modem can output to a single LAN drop 509 which is connected to a special purpose network peripheral 503 which in turn is connected to a general-purpose network device, a desktop computer, 502 via LAN connection 510. Alternatively, an xDSL modem LAN connection can be a multi-drop connection 512 connected to a LAN hub 508. The LAN hub 508 has multiple single LAN drops 509 as its output.

In the case of a special purpose network device with a built-in modem, 504, the device is connected to the desktop computer 502 via a LAN connection 511. It should be noted that with any of the above described connections, multiple special purpose network devices may be used, but are not shown for simplicity. In this case, the devices are chained together by LAN connections. If a device does not recognize its particular port number, it passes traffic on up the chain where it can be used either by other special purpose network devices or by the general purpose network device. It should also be noted that connections from a modem to an IP network can be indirect connections, for example, other modems and networks my intervene.

Figure 6 illustrates another type of network environment in which the present invention can be used. In the network of Figure 6, network devices are connected to the IP network 601 via router 602. All connections are LAN connections. A special purpose network device 607 can be connected to a single LAN drop 603. Alternatively a hub 606 can be connected to a multi-drop LAN connection 608; in this case, multiple, single LAN drops 603 are in turn connected to the hub. In either case, special purpose network devices 607 are connected via LAN connections 605 to general purpose network devices, desktop computers, as before. Again, these embodiments are shown as examples. The invention can be implemented in any network device that can obtain network environment information from another network device to which it has access.

I have described specific embodiments of my invention, and specific environments in which it is used. The foregoing descriptions are no way intended to limit the scope of the appended claims. For example, although much of the previous description refers to IP networking and local area networks the auto initialization mechanism which is the subject of this application can be applied to any kind of networking environment. Examples of other networking environments include SNA, X.25, and ATM. Additionally, multiple types of networking environments can be combined into a single network. For example networking devices connected via digital subscriber loop, can be combined in a network with other devices connected only via LAN. These can in turn be combined with special purpose network devices using the invention, but interconnected, through still other kinds of networks. The particular type of network involved can be a private network or a public network. For example, in the IP networking case, the network involved could be the Internet, or a private "intranet." A person of ordinary skill in the art will quickly recognize there are numerous applications of my invention.

## Claims

1. In a special purpose network device, a method of automatically establishing a network address, the method comprising the steps of:
detecting an initialization event;
capturing a packet which is sent by an associated network device, the packet containing network environment information;
determining the network environment information by examining the packet; and
storing the network environment information.

2. A method as claimed in claim 1 wherein the network environment information includes an Internet protocol (IP) address, and the special purpose network device is pre-programmed to respond to packets with a specific port number.

3. A method as claimed in claim 1 wherein the network environment information includes a media access control (MAC) address.

4. A special purpose network device comprising:
a network interface having a first network connection and a second network connection;
an input/output block;
an encoder/decoder block;
a control block for controlling the functions of the special purpose network device, the control block being connected to the network interface, the input/output block, and the encoder/decoder block; and
a memory connected to the encoder/decoder block, the control block, and the network interface, the memory including program code for causing the special purpose network device to automatically determine network environment information by capturing a packet from an associated network device, and determining and storing the network environment information contained in the packet.

5. A special purpose network device comprising:
means for detecting an initialization event;
means for capturing a packet sent by an associated network device, the packet containing a network environment information;
means for determining the network environment information by examining the packet; and
means for storing the network environment.

6. A special purpose network device comprising:
a network interface having a first network connection and a second network connection;
an input/output block;
an encoder/decoder block; and
means for causing the special purpose network device to automatically determine network environment information by capturing a packet from an associated network device, and determining and storing the network environment information contained in the packet, the means for causing being connected to the encoder/decoder block, the input/output block, and the network interface.

7. The special purpose network device as claimed in claim 4, 5 or 6 wherein the network environment information includes an Internet protocol (IP) address, and the special purpose network device is pre-programmed to respond to packets with a specific port number.

8. The special purpose network device as claimed in claim 4, 5 or 6 wherein the network environment information includes a media access control (MAC) address.

9. A special purpose network device as claimed in any of claims 4 through 8, wherein the network interface further includes a modem.

10. A network comprising:
a line module having an interface to an Internet protocol (IP) network;
a modem connected to the line module;
one or more special purpose network devices connected to the modem, each special purpose network device including means for causing the special purpose network device to automatically determine network environment information by capturing a packet from an associated network device, and determining and storing the network environment information contained in the packet; and
one or more general purpose network devices connected to the one or more special purpose network devices.

11. A network of as claimed in claim 10 further comprising a local area network hub connected between two or more of the special purpose network devices and the modem.

12. A network comprising:
a line module having a connection to an Internet protocol (IP) network;
a special purpose network device having a modem connected to the line module, the special purpose network device including means for causing the special purpose network device to automatically determine network environment information by capturing a packet from an associated network device, and determining and storing the network environment information contained in the packet; and
a general purpose network device connected to the special purpose network device.

13. A network comprising:
a router having an Internet protocol (IP) network connection and a local area network (LAN) connection;
a special purpose network device connected to the LAN connection, the special purpose network device including means for causing the special purpose network device to automatically determine network environment information by capturing a packet from an associated general purpose network device, and determining and storing the network environment information contained in the packet; and
a general purpose network device connected to the special purpose network device.

14. A network as claimed in claim 13 further comprising a LAN hub connected between the LAN connection and two or more special purpose network devices.
